Europäisches Patentamt

**European Patent Office**

**Office européen des brevets**

(11) Publication number: **0 137 260**
**A1**

# EUROPEAN PATENT APPLICATION

(21) Application number: **84110085.2**

(22) Date of filing: **23.08.84**

(51) Int. Cl.⁴: **B 01 D 53/34**

(30) Priority: 26.08.83 SE 8304646

(43) Date of publication of application:
**17.04.85 Bulletin 85/16**

(84) Designated Contracting States:
**AT BE CH DE FR GB IT LI NL SE**

(71) Applicant: RAGN-SELLSFÖRETAGEN AB
Sveavägen 124
S-113 50 Stockholm(SE)

(72) Inventor: Löfstedt, Lars
Sävstigen 5
S-133 00 Saltsjöbaden(SE)

(74) Representative: Swenson, Raymond et al,
c/o RAYMOND SWENSON PATENTBYRA AB Sankt
Eriksterrassen 72A
S-112 34 Stockholm(SE)

(54) A method of reducing discharge of contaminants in trash combustion in order to improve the environment.

(57) The invention refers to a method of reducing discharge of contaminants when burning trash, for example in trash combustion plants (trash heating plants) for the purpose of improving the environment. The flue gases formed when the trash is burned are cooled and condensed, the condensate is used as a washing agent so as to dissolve and collect contaminants occuring in the gases, and the resulting condensate is neutralized and purified. Thereafter the resulting cleaned portion of the condensate is discharged to a wastewater system or similar.

EP 0 137 260 A1

# A METHOD OF REDUCING DISCHARGE OF CONTAMINANTS IN TRASH COMBUSTION IN ORDER TO IMPROVE THE ENVIRONMENT

This invention refers to a method of reducing discharge of contaminants when burning trash in trash-combustion plants (trash heating plants) in order to improve the environment. For example, the relevant contaminants may consist of dust, sulfur compounds, heavy metals, acid gases, and other noxious substances.

It is known in combustion plants to condense the flue gases for the purpose of utilizing the heat content of the flue gases, thereby producing a sulfurous acid condensate which is neutralized for example by letting it pass a magnesium oxide filter or some similar means for increasing the pH, whereafter the condensate is discharged into the municipal wastewater system. However, discharges of this kind comprise a great inconvenience from the viewpoint of the environment, and the primary purpose of the present invention is to ensure that the flue gases are effectively purified and that the flue gas condensate is dealt with and purified prior to being discharged into a wastewater system, for example a municipal waste system.

The means by which the desired object is achieved are disclosed in the accompanying claims, and it should primarily be mentioned that the method indicated by way of introduction is characterised by the flue gases formed in burning the trash being cooled and condensed in a cooler, suitably a tube cooler, and the condensate thus formed being used as a washing agent in the cooler so as to dissolve and collect gaseous and solid contaminants occurring in the gases and the resulting condensate being neutralized and purified before being discharged to a wastewater system or the like.

As an appropriate cooling temperature for the flue gases 70° Celsius can be mentioned, but in certain cases it may be appropriate to carry out the cooling to still lower temperatures, for example approximately 50° Celsius - 60° Celsius.

The liquid which is formed when condensating is being performed can be utilized as a washing agent wherein it may dissolve and collect the gaseous and solid contaminants included in the flue gases. In this connection it may be appropriate to add water to the liquid formed when condensating is carried out to such extent that the volume of the washing agent becomes greater than the original volume of the condensate, for example between 150% and 200% of the latter.

In order to satisfy presently existing environmental requirements the contaminants are to be washed out of the condensate and collected prior to the condensate being discharged into a wastewater system or similar. In collecting the contaminants in this manner it may be appropriate to bind them in solid form in addition to removing and separating noxious substances from the condensate.

It is also possible to let the contaminants which originally occur in low concentration in the flue gases form a sludge or solid waste which can be dealt with and deposited so that it cannot cause harm or inconvenience.

The extent to which neutralizing and purifying the condensate is to be performed should be such that the discharge to the wastewater system or similar becomes unharmful.

The method disclosed by the invention is not limited to that which has been disclosed above, and a number of modifications can be carried out within the scope of the invention.

CLAIMS

1. A method of reducing discharge of contaminants, such as dust, sulfur compounds, heavy metals, acid gases and other noxious substances when burning trash, characterised by cooling the flue gases formed when the trash burns and condensing them in a cooler, using the condensate thus formed as a washing agent in the cooler so as to dissolve and collect gaseous and solid contaminants occurring in the gases, and neutralizing and purifying the resulting condensate before discharging it to a wastewater system or the like.

2. A method in accordance with claim 1, characterised by cooling the flue gases to a temperature of approximately $70^{\circ}$ Celsius, possibly to a temperature of between $50^{\circ}$ Celsius and $60^{\circ}$ Celsius.

3. A method in accordance with claim 1, characterised by adding water to the quantity of liquid formed when condensating is carried out to such extent that the volume of the washing agent becomes between 150% and 200% of the original condensate volume.

4. A method in accordance with claim 1, characterised by the washing and collecting of the contaminants being carried out prior to the condensate being discharged into a wastewater system or similar.

5. A method in accordance with claim 1, characterised by the contaminants being bonded in solid form when being collected.

6. A method in accordance with claim 1, characterised by the noxious substances being detached and separated from the condensate.

7. A method in accordance with claim 1, characterised by the contaminants, which originally occur in low concentration in the flue gases, being permitted to form a slurry or solid waste which may be deposited.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | B.W.K. BRENNSTOFF-WÄRME-KRAFT, vol. 34, no. 2, February 1982, Würzburg; H. ULLRICH et al. "Zur Kühlung von Rauchgas, Vergasungs- und Schwelgasen", pages 55-59 <br> * Page 58, middle column, lines 14-42; figure 3 * | 1,2,4 | B 01 D 53/34 |
| A | DE-A-2 849 607 (CIBA-GEIGY AG.) <br> * Claim 1; page 38, lines 12-18 * | 1,5-7 | |
| A | AUFBEREITUNGS-TECHNIK, no. 5, 1975, Wiesbaden; T. KISTERS "Rauchgasreinigung hinter Abfallverbrennungsanlagen", pages 231-236 <br> * Complete document * | | |
| A | DD-A- 201 486 (VEB BRAUNKOHLENWERK GEISELTAL) <br> * Claims 1, 2, 4; example, figure * | 1,2,4 | TECHNICAL FIELDS SEARCHED (Int. Cl.4) <br><br> B 01 D 53/00 <br> F 23 J 15/00 |

The present search report has been drawn up for all claims

| Place of search | Date of completion of the search | Examiner |
|---|---|---|
| BERLIN | 26-10-1984 | BERTRAM H E H |